# Europäisches Patentamt
## European Patent Office
## Office européen des brevets

(19)

(11) Publication number: **0 022 257**
**B1**

(12) **EUROPEAN PATENT SPECIFICATION**

(45) Date of publication of patent specification: **05.10.83**

(51) Int. Cl.³: **B 05 D 5/06,** B 05 D 5/08, A 47 J 36/02

(21) Application number: **80103808.4**

(22) Date of filing: **04.07.80**

(54) **Stain-resistant coated cookware.**

(30) Priority: **06.07.79 US 55478**

(43) Date of publication of application:
**14.01.81 Bulletin 81/2**

(45) Publication of the grant of the patent:
**05.10.83 Bulletin 83/40**

(84) Designated Contracting States:
**BE DE FR GB IT NL**

(56) References cited:
**EP - A - 0 003 760**
**US - A - 3 241 545**
**US - A - 4 031 286**
**US - A - 4 118 537**
**US - A - 4 123 401**
**US - A - 4 143 204**
**US - A - 4 177 320**
**US - A - 4 180 609**

(73) Proprietor: **E.I. DU PONT DE NEMOURS AND COMPANY**
**Legal Department 1007 Market Street**
**Wilmington Delaware 19898 (US)**

(72) Inventor: **Vassiliou, Eustathios**
**12 S. Townview Lane Woodmere**
**Newark Delaware 19711 (US)**

(74) Representative: **Abitz, Walter, Dr.-Ing. et al,**
**Abitz, Morf, Gritschneder P.O. Box 86 01 09**
**D-8000 München 86 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England

# 0 022 257

Stain-resistant coated cookware

## BACKGROUND OF THE INVENTION

This invention relates to coated cookware having a heat-stable multi-layer nonstick coating.

In modern cookware coatings, it has been found desirable to provide a sparkling appearance. However, sooner or later, food stains appear in most cookware coatings. These stains generally have a brown color and are formed by pyrolysis of particles of food, oil or other materials which penetrate into the more-or-less porous outer layers of the coating. This phenomenon occurs with most types of cookware coating, including coatings based on polytetrafluoroethylene (PTFE).

The problem of staining becomes more acute when the temperature profile across the face of the cooking surface is not uniform. This occurs particularly in cookware heated by an electrical resistance element in the shape of a pattern imbedded in or against the back of the cookware, i.e., the surface opposite that on which the coating system is applied. This staining phenomenon takes the form of a brown line following the pattern of the heating element.

It would be desirable to be able to coat electric cookware in such a way that no conspicuous stained pattern develops during use of the cookware.

Coatings based on polytetrafluoroethylene are described in U.S. Patent 3,241,545. It is stated in the introductory portion of the U.S. patent, especially in column 2, line 37 et seq., that, inter alia, polytetrafluoroethylene coatings have been proposed for cookware articles but that such coatings are unsatisfactory in several respects. In particular, such coatings must frequently be renewed. The attempt to make these coatings thicker was unsuccessful because thicker polytetrafluoroethylene coatings have cracks, contained contaminants and were not smooth enough. Due to the crack formation, moisture and greases and also other contaminations penetrated into the surface layer so that cleaning was no longer possible after a short period and the articles accordingly took on an impaired appearance.

The said U.S. patent proposes in claim 1 for solving this problem to form the polytetrafluoroethylene coating from three individual layers which are each alone very thin but as a whole provide a considerable thickness. Thus, the inner layer consists substantially of pure polytetrafluoroethylene, the intermediate layer of polytetrafluoroethylene and an inorganic oxide coloring pigment and the outer layer substantially in turn of pure polytetrafluoroethylene. Hence, the solution resides on principle in a three-layer construction. The pigment contained in the intermediate layer contributes nothing to the solution of the problem posed in the U.S. patent. According to lines 49 to 51 in column 5, the pigment is not necessarily present and serves alone for the purpose of imparting the desired color to the article.

U.S. Patent 4,180,609 relates to coatings on the basis of fluoropolymers which contain mica particles coated with pigment. It is pointed out in the introductory part of that U.S. patent in line 19 et seq. of column 1 that coatings on the basis of fluoropolymers have an improved scratch resistance when they contain mica particles coated with pigment. The problem underlying that U.S. patent resides in improving still further the scratch resistance of fluoropolymer coatings containing mica particles coated with pigment. The solution of that problem resides in that a two-layer construction of the coating is proposed, less to very much less mica particles being present in the top layer than in the base layer therebelow.

It is obvious that the two U.S. patents are not suited for suggesting any solution of the above-mentioned problem.

## SUMMARY OF THE INVENTION

This invention provides a cookware article comprising a substrate coated with a heat-stable coating system comprising three layers, each layer containing a polymer stable at temperatures above 300°C, said layers including

a primer layer in direct contact with the substrate and which adheres the coating system to the substrate,

an intermediate layer in contact with the primer layer and containing pigments, and

a topcoat layer in contact with the intermediate layer and containing mica or mica platelets coated with pigment, characterised in that the topcoat layer is light-transmitting and gives a sparkling appearance to the coating system and in that the intermediate layer has enough pigment of an appropriate colour to mask the brown colour of food stains that develop in the coating system during cooking.

## DETAILED DESCRIPTION OF THE INVENTION

It has been found that food stains do not appear conspicuously on cookware coatings, even on cookware heated with a circular electrical heating element on the back, if a three-layer coating is used including a primer, an intermediate layer with enough pigment of an appropriate color to mask the brown color of food stains that develop in the coating, and a light-transmitting top layer containing mica or mica platelets coated with pigment to give a sparkling appearance. Dark brown or black pigments in the intermediate layer are desirable. The present invention draws on technology expressed in other U.S. Patents, including

2

4,123,401 — Berghmans and Vary (October 31, 1978) directed to coating compositions containing fluoropolymer, mica, decomposable polymer, and a liquid carrier, particularly suited for use as topcoats;

4,049,863 — Vassiliou (1977) directed to primers containing fluoropolymer, colloidal silica, the salt of a polyamic acid, and a coalescing agent, mica, and a liquid carrier;

4,087,394 — Concannon (May 2, 1978) directed to aqueous coating compositions of fluorocarbons and a second film-forming material which can be the salt of a polyamic acid;

4,143,204 — Fang (March 6, 1979) directed to coated articles in which the coating comprises a copolymer of tetrafluoroethylene and hexafluoropropylene along with an auxiliary film-forming material;

and the following five patents which are concerned with heat-stable coatings containing oxidation catalysts and/or antioxidants:

4,054,704 — Vassiliou (1977),

4,054,705 — Vassiliou (1977),

4,064,303 — Vassiliou (1977),

4,120,608 — Vassiliou (October 17, 1978), and

4,122,226 — Vassiliou (October 24, 1978);

and 4,180,609 — Vassiliou (December 25, 1979) is directed to coated articles having a multi-layer coating with fluorocarbon and mica in a basecoat and a topcoat, and with a defined relationship between the concentration of mica in the basecoat and that in the topcoat.

The above-mentioned patents are incorporated herein by reference.

Preferably by using techniques of the above-identified patents, cookware is coated with a primer layer, an intermediate layer and a topcoat layer which have the defined relationships to obtain the advantages of the invention.

The following example teaches a preferred embodiment of the invention. Parts, percentages and proportions herein are by weight except where indicated otherwise.

The following coating compositions were used to make the respective coating layers. Suitable methods for preparing the different layers are described in Example 2 of U.S. Patent 4,049,863 for the primer layer and Example 4 of 4,123,401 and Example 1 of 4,180,609 for the intermediate and topcoat layers, respectively.

Briefly, the procedure involved gritblasting an aluminum substrate, allowing the primer to air dry, then spraying on the intermediate and topcoat layers, wet-on-wet, followed by a bake at 425°C for 5 minutes. The resulting coatings were a dark chocolate brown with a sparkling appearance, and they did not show food stain after extensive cooking when the substrate was an electric grill with a patterned electrical resistance heating element embedded in the aluminum.

TABLE I
Primer Coating Composition

|  | % |
| --- | --- |
| PTFE Solids (60% solids in water, Du Pont T30) | 11.16 |
| Ludox* AM Colloidal Silica Solids (Du Pont) | 0.96 |
| Amide-Imide Resin (Polyamide acid of Example 1A of U.S. Patent 4,049,863) | 4.93 |
| Octyl Phenol Polyether Alcohol | 0.67 |
| Deionized Water | 67.76 |
| Furfuryl Alcohol | 3.60 |
| Diethyl Ethanolamine | 0.65 |
| Triethyl Amine | 1.31 |
| N-Methyl Pyrrolidone | 2.46 |
| Cobalt Aluminate Pigment | 5.88 |
| Red Iron Oxide Pigment | 0.59 |
| Afflair* Pigment (Du Pont) $TiO_2$ Coated Mica | 0.05 |
|  | 100.00 |

* Registered Trade Marks

## TABLE II
### Intermediate Coating Composition

| | |
|---|---|
| PTFE Solids (60% solids in water, Du Pont T30) | 42.39 |
| Phosphoric Acid (100%) | 0.08 |
| Sodium Lauryl Sulfate | 0.03 |
| Sodium Polynaphthalene Sulfonate | 0.01 |
| Acrylic Latex Solids (methyl methacrylate/ethyl acrylate/methacrylic acid — 39/57/4 terpolymer dispersion (40% in water) 0.2 micron average particle size) | 5.04 |
| Deionized Water | 39.19 |
| Octyl Phenol Polyether Alcohol | 2.54 |
| Triethanolamine | 2.82 |
| Oleic Acid | 1.14 |
| Toluene | 4.37 |
| Butyl Carbitol | 1.49 |
| Red Iron Oxide Pigment | 0.28 |
| Channel Black | 0.10 |
| Afflair* Pigment (Du Pont) $TiO_2$ Coated Mica | 0.43 |
| Aluminosilicate Pigment | 0.05 |
| | 100.00 |

* Registered Trade Marks

## 0 022 257

### TABLE III
#### Topcoat Coating Composition

| | |
|---|---|
| PTFE Solids (60% solids in water, Du Pont T30) | 43.05 |
| Sodium Lauryl Sulfate | 0.03 |
| Acrylic Latex Solids (as in Table II) | 4.81 |
| Deionized Water | 42.93 |
| Triton* X-100 | 2.58 |
| Triethanolamine | 1.59 |
| Oleic Acid | 0.75 |
| Toluene | 2.85 |
| Butyl Carbitol | 0.98 |
| Afflair* Pigment (Du Pont) $TiO_2$ Coated Mica | 0.43 |
| | 100.00 |

\* Registered Trade Marks

Instead of the red iron oxide — carbon black combination of Table II, one can use equivalent amounts of burnt umber, having an approximate composition shown in Table IV.

### TABLE IV
#### Composition of Burnt Umber

| | % |
|---|---|
| $Fe_2O_3$ | 40—73 |
| $SiO_2$ | 10—20 |
| $Al_2O_3$ | 10—20 |
| $MnO_2$ | 4—19 |
| $H_2O$ sol. salts | 0.4 |
| Pb | 0.02 |
| As | 0.03 |
| Mg | 0.0075 |

### Claims

1. A cookware article comprising a substrate coated with a heat-stable coating system comprising three layers, each layer containing a polymer stable at temperatures above 300°C, said layers including

a primer layer in direct contact with the substrate and which adheres the coating system to the substrate,

an intermediate layer in contact with the primer layer and containing pigments, and

a topcoat layer in contact with the intermediate layer and containing mica or mica platelets coated with pigment, characterised in that the topcoat layer is light-transmitting and gives a sparkling

6

appearance to the coating system and in that the intermediate layer has enough pigment of an appropriate colour to mask the brown colour of food stains that develop in the coating system during cooking.

2. The article of claim 1 in which the heat-stable polymer is a silicone, polysulfide, polymerized parahydroxy-benzoic acid, a polysulfone, a polyimide, a polyamide, a salt of a polyamic acid, a polysulfonate, a polysulfonamide, a fluorocarbon polymer, or a mixture of two or more of the above, and said heat-stable polymers are the same or in any combination in the three layers of the coating.

3. The article of claim 1 in which the intermediate layer includes red iron oxide pigment, carbon black, and an antioxidant.

4. The article of claim 3 in which the antioxidant is phosphoric acid.

5. The article of claim 1 in which the intermediate layer includes black iron oxide pigment.

6. The article of claim 1 in which the intermediate layer includes burnt umber.

7. The article of claim 1 in which the topcoat contains an antioxidant.

8. The coated article of claim 7 in which the topcoat contains

(a) 80—99.8%, by weight of the total of (a) and (b), of a particulate polymer polymerized or copolymerized from monomers selected from one or more monoethylenically unsaturated hydrocarbon monomers and hydrocarbon ether monomers, said monomers being completely substituted with fluorine atoms or a combination of fluorine atoms and chlorine atoms, and

(b) 0.2—20%, by weight of the total of (a) and (b), of mica or mica platelets coated with pigment, the total of (a) and (b) equaling 100%.

9. The article of claim 8 in which the topcoat includes polytetrafluoroethylene or a copolymer of tetrafluoroethylene and hexafluoropropylene.

10. The article of claim 1 containing an electrical resistance heat source in the form of a discrete pattern on the opposite side of the substrate from the coating system.

**Revendications**

1. Article de cuisson comprenant un substrat revêtu d'un système de revêtement thermostable comprenant trois couches, chaque couche contenant un polymère stable à des températures supérieures à 300°C, ces couches comprenant:

une couche primaire en contact direct avec le substrat et qui fait adherer le système de revêtement au substrat,

une couche intermédiaire en contact avec la couche primaire et contenant des pigments, et

une couche supérieure en contact avec la couche intermédiaire et contenant du mica ou des plaquettes de mica revêtues de pigment, caractérisé en ce que la couche supérieure est translucide et donne une apparence étincelante au système de revêtement et en ce que la couche intermédiaire contient assez de pigment d'une couleur appropriée pour masquer la couleur brune des taches alimentaires qui se forment dans le système de revêtement pendant la cuisson.

2. Article selon la revendication 1, dans lequel le polymère thermostable est une silicone, un polysulfure, un acide parahydroxybenzoïque polymérisé, une polysulfone, un polyimide, un polyamide, un sel d'un acide polyamique, un polysulfonate, un polysulfonamide, un polymère de fluorocarbure, ou un mélange de deux ou plusieurs de ceux-ci, et ces polymères thermostables sont les mêmes ou en toute combinaison dans les trois couches du revêtement.

3. Article selon la revendication 1, dans lequel la couche intermédiaire comprend un pigment oxyde de fer rouge, du noir de carbone et un anti-oxydant.

4. Article selon la revendication 3, dans lequel l'antioxydant est l'acide phosphorique.

5. Article selon la revendication 1, dans lequel la couche intermédiaire comprend du pigment oxyde de fer noir.

6. Article selon la revendication 1, dans lequel la couche intermédiaire comprend de la terre d'ombre brûlée.

7. Article selon la revendication 1, dans lequel la couche supérieure contient un antioxydant.

8. Article revêtu selon la revendication 7, dans lequel la couche supérieure contient

(a) 80 à 99,8% en poids, sur le total de (a) et (b), d'un polymère en particules obtenu par polymérisation ou co-polymérisation de monomères choisi entre un ou plusieurs hydrocarbures et éthers d'hydrocarbure monomères monoéthyléniquement insaturés, ces monomères étant complètement substitués par des atomes de fluor ou une combinaison d'atomes de fluor et d'atomes de chloro, et

(b) 0,2 à 20% en poids, sur le total de (a) et (b), de mica ou de plaquettes de mica revêtues de pigment, le total de (a) et (b) étant égal à 100%.

9. Article selon la revendication 8, dans lequel la couche supérieure comprend du polytétrafluoroéthylène ou un copolymère de tétrafluoroéthylène et d'hexafluoropropylène.

10. Article selon la revendication 1, contenant une source de chaleur à résistance électrique sous la forme d'une configuration discrète, sur le côté opposé du substrat relativement au système de revêtement.

# 0 022 257

**Patentansprüche**

1. Koch-, Brat- und Backgeräte, umfassend ein Substrat, das mit einem wärmestabilen Überzugssystem, umfassend drei Schichten, beschichtet ist, wobei jede Schicht ein bei Temperaturen oberhalb 300°C stabiles Polymeres enthält, wobei diese Schichten einschließen:

eine Grundschicht, die in direkter Berührung mit dem Substrat steht und für die Haftung des Überzugssystems an dem Substrat sorgt

eine Zwischenschicht, die in Berührung mit der Grundschicht steht und Pigmente enthält, und

eine Deckschicht, die in Berührung mit der Zwischenschicht steht und die Glimmer oder Glimmerblättchen, beschichtet mit Pigment, enthält, dadurch gekennzeichnet, daß die Deckschicht lichtdurchlässig ist und dem Überzugssystem ein funkelndes Aussehen verleiht, und daß die Zwischenschicht ausreichend Pigment einer entsprechenden Farbe enthält, um die braune Farbe der Nahrungsmittelflecken, die sich während des Kochens, Backens oder Bratens in dem Überzugssystem bilden, zu maskieren.

2. Gerät nach Anspruch 1, in welchem das wärmestabile Polymere ein Silikon, Polysulfid, polymerisierte para-Hydroxybenzoesäure, ein Polysulfon, ein Polyimid, ein Polyamid, ein Salz einer Polyaminsäure, ein Polysulfonat, ein Polysulfonamid, ein Fluorkohlenstoffpolymeres oder eine Mischung von zwei oder mehreren davon ist, und daß die genannten wärmestabilen Polymeren die gleichen oder in irgendeiner Kombination in den drei Schichten des Überzuges sind.

3. Gerät nach Anspruch 1, in welchem die Zwischenschicht rotes Eisenoxidpigment, Ruß und ein Antioxidans einschließt.

4. Gerät nach Anspruch 3, in welchem das Antioxidans Phosphorsäure ist.

5. Gerät nach Anspruch 1, in welchem die Zwischenschicht schwarzes Eisenoxidpigment einschließt.

6. Gerät nach Anspruch 1, in welchem die Zwischenschicht gebrannte Umbra einschließt.

7. Gerät nach Anspruch 1, in welchem die Deckschicht ein Antioxidans enthält.

8. Gerät nach Anspruch 7, in welchem die Deckschicht enthält:

(a) 80—99,8 Gew.-% bezogen auf (a) und (b) eines teilchenförmigen Polymeren, polymerisiert oder copolymerisiert aus Monomeren, ausgewählt unter einem oder mehreren monoethylenisch ungesättigten Kohlenwasserstoffmonomeren und Kohlenwasserstoffethermonomeren, wobei die genannten Monomeren vollständig durch Fluoratome oder eine Kombination von Fluor- und Chloratomen substituiert sind, und

(b) 0,2 — 20 Gew.-%, bezogen auf (a) und (b), Glimmer oder Glimmerblättchen, beschichtet mit Pigment,

wobei (a) und (b) zusammen 100% ausmachen.

9. Gerät nach Anspruch 8, in welchem die Deckschicht Polytetrafluorethylen oder ein Copolymeres von Tetrafluorethylen und Hexafluorpropylen umfaßt.

10. Gerät nach Anspruch 1, enthaltend eine elektrische Widerstandswärmequelle in Form eines diskreten Musters auf der in Bezug aus das Überzugssystem entgegengesetzten Seite des Substrats.